(19) Europäisches Patentamt
European Patent Office
Office européen des brevets

(11) **EP 2 120 207 A1**

(12) **EUROPEAN PATENT APPLICATION**

(43) Date of publication:
**18.11.2009 Bulletin 2009/47**

(51) Int Cl.:
***G06T 3/40*** *(2006.01)*

(21) Application number: **08156296.9**

(22) Date of filing: **15.05.2008**

| (84) Designated Contracting States: | (72) Inventors: |
|---|---|

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Telefonaktiebolaget LM Ericsson (publ)**
**164 83 Stockholm (SE)**

(72) Inventors:
• **Rodrigues, Joachim**
 **SE-223 61, Lund (SE)**
• **Vitella-Espinoza, Jordan**
 **SE-223 52, Lund (SE)**

(74) Representative: **Schwarze, Holm**
**Zacco Denmark A/S**
**Hans Bekkevolds Allé 7**
**2900 Hellerup (DK)**

(54) **Method and device for scaling digital images**

(57) A method of scaling an original digital representation by a scaling factor to obtain a scaled digital representation, the digital representations comprising a plurality of cells having respective cell values and being arranged in respective regular grids. The method comprises computing a scaled cell value of a first scaled cell from at least an original cell value of a first original cell, determining an original coordinate of a second original cell as an integer portion of a computed parameter, and computing a scaled cell value of a second scaled cell from at least an original cell value of the second original cell. Determining the original coordinate of the second original cell comprises adding a value determined from the scaling factor to a parameter indicative of an original coordinate of the first original cell and of the distance between the first original cell and the first scaled cell to obtain the computed parameter.

FIG. 3

EP 2 120 207 A1

**Description**

TECHNICAL FIELD

Disclosed is a method, product means, and a device for scaling digital representations such as images.

BACKGROUND

Many processing devices process digital representations such as images in the form of pictures, movie frames, etc. The digital representations are usually in the form of cells arranged in a regular grid. For example, images are conventionally represented as equally sized cells, referred to as picture elements or pixels, arranged in a 2-dimensional square grid. Each cell has a cell value associated with it, e.g. representing the colour, intensity or greyscale value of the cell. The position of each cell is conveniently identified in terms of its coordinates in a suitable coordinate system. For example, the pixels of a 2-dimensional image may be identified by their respective coordinates relative to a 2-dimensional Cartesian coordinate system.

There is an increasing demand on image quality in processing devices such as portable or hand-held devices, e.g. mobile terminals etc.

One frequent operation on such digital representations is the scaling from an original representation to a scaled digital representation having a different resolution, i.e. a different number of cells per unit length, in one or more dimensions. For example, scaling operations may be required or desirable when images are received and/or stored and/or generated in a resolution different from the resolution required or desirable e.g. for storage, processing by another application, transmission via a communications interface, display on a display, etc.

Consequently efficient scaling methods are desirable that result in high quality representations and require little computational resources. In particular, methods suitable for efficient hardware-accelerated scaling are desirable.

So-called nearest neighbouring scaling is an easy algorithm to implement in hardware (HW). However, the quality of the scaled image is relatively poor.

US5801678 discloses an apparatus and a method for effectuating bi-linear interpolation of pixel data during the scaling of video images from an original image with M columns to a scaled image with N columns. In an embodiment of this prior art method a pixel value of the scaled image is calculated from its immediately enclosing original pixels by performing two first linear interpolations in one direction and then a second interpolation in the other direction using the interpolated values of the first two interpolations. The column location or pixel count of one of the immediately enclosing original pixels is computed as the integer portion of the expression (n.M+N), where n is the column number of the scaled pixel.

SUMMARY

Disclosed herein is a method, implemented by a processing device, of scaling an original digital representation, e.g. a digital representation of an object, by at least one scaling factor to obtain a scaled digital representation. The original digital representation comprises a plurality of original cells having respective original cell values and being arranged in an original regular grid, a position of each original cell in the original grid being identifiable by at least one corresponding original coordinate associated with the original cell. The scaled digital representation comprises a plurality of scaled cells having respective scaled cell values and being arranged in a scaled regular grid, a position of each scaled cell in the scaled grid being identifiable by at least one corresponding scaled coordinate associated with the scaled cell. The method comprises

- computing a scaled cell value of a first scaled cell from at least an original cell value of a first original cell;
- determining an original coordinate of a second original cell as an integer portion of a computed parameter;
- computing a scaled cell value of a second scaled cell from at least an original cell value of the second original cell; wherein determining the original coordinate of the second original cell comprises adding a value determined from the scaling factor to a parameter indicative of an original coordinate of the first original cell and of the distance between the first original cell and the first scaled cell to obtain the computed parameter.

Consequently, the coordinate of the original cell to be used for the calculation of the scaled cell value of the next scaled cell is determined as the integer portion of a parameter value that is obtained by a simple add instruction, thereby requiring considerable less computational resources than prior art methods.

Embodiments of the method described herein are applicable for arbitrary scaling factors including both upscaling and downscaling, i.e. for scaling factors larger and smaller than 1. Furthermore, different scaling factors for scaling in different directions (e.g. x and y directions) may be applied. Consequently, the same scaling strategy may be implemented for both up-and downscaling, thereby avoiding the HW controller overhead resulting from the application of two different scaling strategies.

In some embodiments, the original and scaled digital representations are respective original and scaled images and the original and scaled cells are respective original and scaled pixels arranged in a two-dimensional grid. Nevertheless, the method described herein may also be applied to other digital representations, in particular spatial representations, e.g. a representation of voxels in a three-dimensional grid. Furthermore, the digital representation may be indicative of any spatially varying property of an object.

The reference to original entities and/or properties, e.g. original representation, original pixel, etc., as used herein are intended to refer to the corresponding entity/property before scaling, i.e. the entity/property that serves as input to the scaling process. It will be appreciated that the original entity/property, e.g. the original representation, itself may be the result of a previous processing e.g. a previous scaling process.

In some embodiments, the value determined from the scaling factor is a reciprocal of the scaling factor. As the scaling factor is constant for a given scaling operation, its reciprocal only needs to be calculated once and does not need to be recalculated for every pixel or scan line.

In some embodiments the method further comprises determining the distance between the second original cell from the second scaled cell from the computed parameter, e.g. as the fractional part of the computed parameter, thus two values used in the scaling operation are computed by a single operation, e.g. a simple add instruction. The distance between the second original cell from the second scaled cell is used as a weighting factor in the computation of the scaled value of the second scaled cell.

The second scaled cell may be adjacent to, i.e. nearest neighbour to, the first scaled cell in the regular grid. Furthermore, each of the original and scaled regular grids may comprise an array of scan lines, each scan line comprising a sequence of cells. In a two-dimensional grid of cells, the array of scan lines may thus be a one-dimensional array of scan lines. In this case, the grid is a square grid formed by scan lines and columns of cells, such that each cell of a scan line is comprised in a column of cells. The coordinates of a cell in the corresponding regular grid may be defined as a tuple of grid positions in the respective directions of the regular grid. The coordinate determined as the integer portion of the computed parameter may thus represent the cell index/number along a scan line. In a two-dimensional square grid of columns and scan lines, a cell position may be identified by the scan line number and the column number of the cell, where the column number of the original cell is determined as the integer portion of the computed parameter.

The second scaled cell may be included in the same scan line as the first scaled cell. The coordinate of the first original cell in a scan line may be determined from a parameter value computed from the coordinate of the first scaled cell in the same scan line, the scaling factor, and optionally an offset between a border of the representation and the first cell. The parameter value may be stored in a register of the processing device.

In some embodiments, computing the scaled value of the second scaled cell comprises computing the scaled value by bilinear scaling. However, other scaling methods may be used instead, e.g. bicubic scaling. The calculated coordinate of the second original cell may thus identify one of one or more original cells positioned in a predetermined spatial relationship relative to the second original cell, and the calculation of the scaled cell value of the second scaled cell may be based on the thus identified one or more original cells. In one embodiment, a pixel value of the scaled digital representation is calculated from its immediately enclosing original pixels by performing two first linear interpolations in one direction and then a second interpolation in the other direction using the interpolated values of the first two interpolations.

In some embodiments, the parameter indicative of an original coordinate of the first original cell and of the distance between the first original cell and the first scaled cell comprises an integer portion indicative of the original coordinate of the first original cell and a fractional portion indicative of the distance between the first original cell and the first scaled cell. Hence, the computed parameter is calculated iteratively by adding the value determined from the scaling factor to the corresponding computed parameter determined for the previous scaled cell.

The present invention relates to different aspects including the method described above and in the following, corresponding devices, and computer programs, each yielding one or more of the benefits and advantages described in connection with the above-mentioned method, and each having one or more embodiments corresponding to the embodiments described in connection with the above-mentioned method.

More specifically, according to another aspect, a data processing device comprises a scaling module configured to perform the method described herein. The scaling module may be implemented partly or completely in hardware.

The term processing device is intended to comprise any electronic device comprising processing means for data processing. In particular, the term processing device is intended to comprise any electronic equipment, portable radio communications equipment, and other handheld or portable devices, and integrated circuits, microprocessors, chips or chipsets for use in such equipment. In some embodiments, a processing device comprises at least one of storage means for storing the scaled digital representation and a display for displaying the scaled digital representation. The term portable radio communications equipment includes all equipment such as mobile terminals, e.g. mobile telephones, pagers, communicators, electronic organisers, smart phones, personal digital assistants (PDAs), handheld computers, or the like.

The term storage medium is intended to include any circuitry or device suitable for storing digital data items. Examples of such storage media include non-volatile memory, a read-only-memory (ROM), a random access memory (RAM), a flash memory, an Erasable Programmable Read-Only Memory (EPROM), or the like. In some embodiments, the storage medium is included in the processing device.

It is noted that the features of the methods described above and in the following may be implemented in software and carried out on a data processing device or other processing means caused by the execution of program code means such as computer-executable instructions. Here and in the following, the term processing means comprises any circuit and/or device suitably adapted to perform the above functions. In particular, the above term comprises general- or special-purpose programmable microprocessors, Digital Signal Processors (DSP), Application Specific Integrated Circuits (ASIC), Programmable Logic Arrays (PLA), Field Programmable Gate Arrays (FPGA), special purpose electronic circuits, etc., or a combination thereof.

Hence, according to another aspect, a computer program comprises program code means adapted to cause a data processing device to perform the steps of the method described above and in the following, when said computer program is run on the data processing device.

For example, the program code means may be loaded in a memory, such as a RAM, from a storage medium or from another computer via a computer network. Alternatively, the described features may be implemented by hardwired circuitry instead of software or in combination with software.

BRIEF DESCRIPTION OF THE DRAWINGS

The above and other aspects will be apparent and elucidated from the embodiments described with reference to scaling of two-dimensional images represented by pixels arranged in scan lines and columns and with reference to the drawing in which:

Fig. 1 shows a schematic block diagram of an embodiment of a processing device.

Fig. 2 illustrates an example of a scaling procedure for bilinear scaling of images.

Fig. 3 shows a flow diagram of an example of a method for bilinear scaling of images.

DETAILED DESCRIPTION

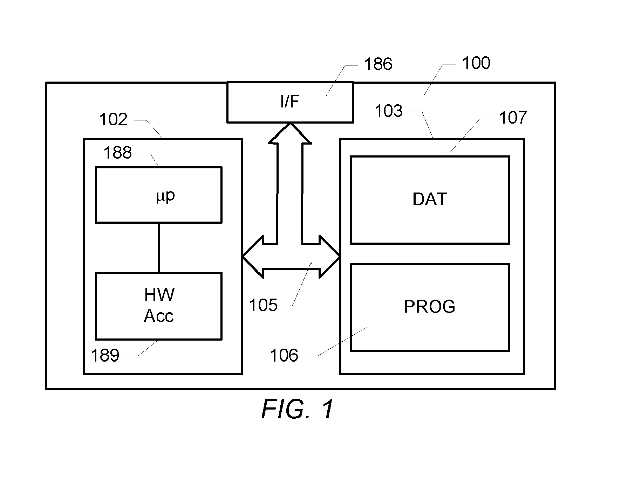

Fig. 1 shows a schematic block diagram of a device comprising one or more Application Specific Integrated Circuit (ASIC) as an example of a processing device, e.g. one or more ASICs for use in a mobile terminal or any other electronic equipment. The ASIC device, generally designated 100, comprises a central processing logic block 102, an interface block 186 for inputting/outputting data to from the ASIC device, and a data storage block 103 for storing program code and/or data such as image data. The data storage block 103 is connected with the central processing logic block 102 via a system bus 105. The data storage block 103 includes a program memory block 106 for storing program instructions, a data memory block 107 for accommodating registers, random access memory (RAM) and/or the like. The program memory block may be implemented as read-only memory (ROM), and erasable programmable read only memory (EPROM), Flash memory, EEPROM or the like. It is understood, however, that the data storage block may include additional and/or alternative memory blocks or storage types.

The central processing logic block 102 comprises a microprocessor 188 or other logic circuitry suitable for controlling the operation of a mobile terminal or other electronic equipment, e.g. by executing program code stored in the data storage block 103. The central processing logic block 102 further comprises a hardware accelerator block 189 configured to perform the scaling method described herein. Alternatively, the scaling process may be implemented partly or completely in software, e.g. software executed by the microprocessor 188.

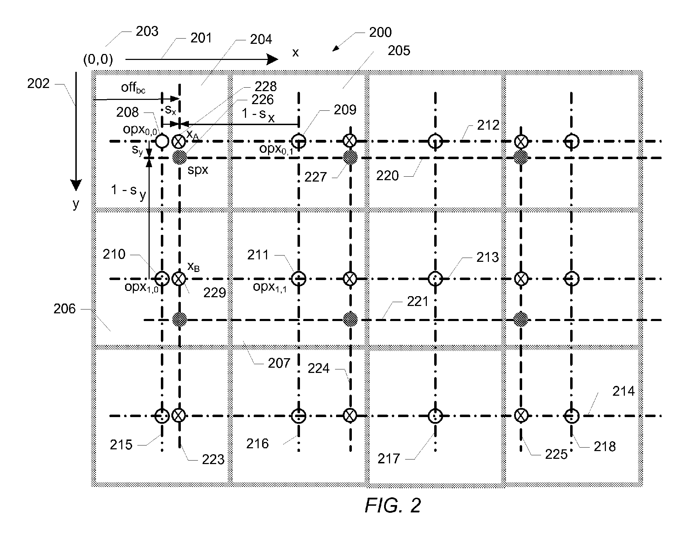

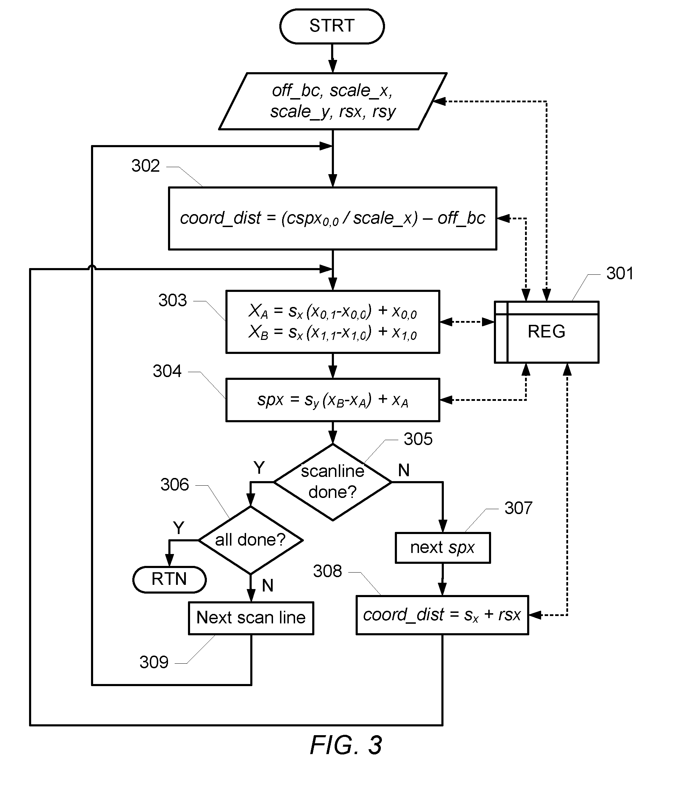

An example of the scaling process will now be described with reference to figs. 2 and 3, where fig. 2 illustrates an example of a scaling procedure for bilinear scaling of images, and fig. 3 shows a flow diagram of an example of a method for bilinear scaling of images.

Fig. 2 shows an original pixel grid representing an image, generally designated 200. The original pixel grid is a square grid where each original pixel represents a square, e.g. squares 204-207. The original grid is shown by dashed dotted lines 212-218. In particular, the original pixels are arranged in scan lines 212-214 and columns 215-218. In the present example, the scan lines extend in the x-direction 201 of a coordinate system having an origin 203, while the columns extend in the y-direction 202 of the coordinate system. The location of each original pixel may be defined by the coordinates of the pixel centres, as indicated by unfilled circles in fig. 2, e.g. locations 208-211 of pixels 204-207, respectively. Each original pixel of the image 200 has associated with it a respective original pixel value, representing e.g. a color, a grey scale value, or any other spatially varying property. In particular, the method described herein is not limited to any particular color space.

The image 200 may be scaled in the x-direction and/or the y-direction as defined by respective scaling factors *scale_x* and *scale_y* indicative of the ratio between the pixel-to-pixel distances in *x*- and *y*-direction, respectively, in the original image and the corresponding pixel-to-pixel distances in the scaled image. Each scaling factor may be larger than 1, corresponding to an upscaling of the image, or smaller than 1, corresponding to a downscaling of the image. The smallest and largest scaling factors may depend on the wordlength used in a given implementation. The pixels of the scaled image are thus positioned in a scaled square grid illustrated by dashed lines 220-221 and 223-225, where the scaled pixels are arranged in scan lines 220-221 and columns 223-225 parallel to but generally displaced from the scan lines and columns, respectively, of the original image. The location of each scaled pixel may thus be defined by the coordinates of the respective pixel centres, as indicated by filled dots in fig. 2, e.g. locations 226-227. Each scaled pixel has associated with it a respective scaled pixel value, and the scaling process determines the pixel values of the scaled pixels from respective ones of the original pixels.

Computation of the pixel value, e.g. the color information, of a scaled pixel (cell) *spx* in a scaled image may be performed based on the four neighbouring pixels in the original image. For example, the pixel value of scaled pixel 226 may computed from the pixel values of original pixels 208-211. Generally, the neighbouring original pixels of a scaled pixel will be designated $opx_{0,0}$, $opx_{0,1}$, $opx_{1,0}$, and $opx_{1,1}$, respectively, where the indices indicate the scan line and column indices, respectively, relative to the originally processed scaled pixel *spx.* At the image boundaries, pixels may be mirrored and/or repeated outside the boundary for the purpose of the calculation of the scaled pixel values. The pixel value of the scaled pixel may be computed from the pixel values of the 4 original pixels, and from the coordinate distance between the scaled and one of the original pixels. In the example of fig. 2, the distance used for the purpose of the calculation of the scaled pixel values is the distance between the scaled pixel and the closest original pixel having smaller coordinate values in both directions. These distances are denoted $s_x$ and $s_y$ in the x- and y-direction, respectively. For example, the calculation of the pixel value of scaled pixel 226 is based on its distance from original pixel 208. For the purpose of the present description, the pixel-to-pixel distance in the scaled image is defined to be 1, and thus, the offset (*off_bc*) between the pixel boundary and the pixel centre is 0.5. However, it will be appreciated, that the method may also be applied to other pixel-to-pixel distances.

Referring to fig. 3 with continued reference to fig. 2, an example of a process for scaling an original image receives the following inputs:

-   Offset coordinates of the first and last pixel in the scaled scan line (SL)
-   Offset coordinates of the first and last SL in the scaled image.
-   Scaling factors *scale_x* and *scale_y* in the *x*- and *y*-direction, respectively, and their reciprocals *rsx= 1/seale_x* and *rsy= 1/seale_y*.

The above input values may be made available to the scaling process by storing them in CPU programmable registers 301 of the processing device. The offset coordinates of the first and last pixels and first and last scan lines are used to define the boundaries of the image area to be scaled.

In step 302, the process computes a value coord_dist indicative of the *x*-coordinate of pixel $opx_{0,0}$ (dependent on the offset coordinate of the first pixel in the scaled SL) and stores it in a CPU programmable register 301. The value for register coord_dist is computed as

$$\text{coord\_dist} = \frac{\text{cspx}_{0,0}}{\text{scale\_x}} - \text{off\_bc} \qquad (1)$$

where $cspx_{0,0}$ is the x-coordinate of the first scaled pixel of a scan line to be calculated, and *off_bc* is the offset between pixel boundary and pixel centre.

As the value *off_bc* is only used once, it may be managed by software and does not need to be available to the process in a register. Alternatively, the process may receive the initial value of *coord_dist* as an input value. For example, the process that invokes the scaling process may compute *coord_dist* according to eqn. (1) and make the result available to the scaling process by storing it in CPU programmable registers 301 of the processing device. The algorithm allows any start location for *spx.*

The value in (1) is a fixed-point value where the integer and fractional portions provide the x-coordinate $copx_{0,0}$ of the original pixel $opx_{0,0}$ and the coordinate distance $s_x$ between the original pixel $opx_{0,0}$ and the currently processed scaled pixel *spx* as follows:

$$copx_{0,0} = INT(coord\_dist), \quad \text{i.e. the integer part of } coord\_dist \qquad (2)$$

$$s_x = coord\_dist - copx_{0,0}, \quad \text{i.e. the fractional part of } coord\_dist.$$

Thus the value calculated in step 302 and stored in one of the registers 301 holds the value of coordinate $copx_{0,0}$ and the horizontal coordinate distance $s_x$ between the scaled and original pixels.

Similarly, in step 302 the process may calculate a corresponding value indicative of the $y$-coordinate of pixel $opx_{0,0}$, i.e. according to eqn. (1), but using the corresponding values in y-direction, thus resulting in a corresponding fixed point value where the integer and fractional portions provide the $y$-coordinate of the original pixel $opx_{0,0}$ and the coordinate distance $s_y$ between the original pixel $opx_{0,0}$ and the currently processed scaled pixel $spy$ as was shown in eqn. (2) for the x-direction.

In the following steps, the pixel value of the scaled pixel $spc$ is computed by bilinear scaling.

In step 303, the process calculates the pixel values of two intermediate pixels $x_A$ and $x_B$ whose centres are shown in fig. 2 as crossed circles 228 and 229, respectively. The intermediate pixel $x_A$ is positioned on the same scan line 212 as original pixel $opx_{0,0}$ and on the same column 223 as the scaled pixel $spc$. The intermediate pixel $x_B$ is positioned on the same scan line 213 as original pixel $opx_{0,1}$ and on the same column 223 as the scaled pixel $spx$. Hence, the $x$-coordinates of the intermediate pixels correspond to the scaled pixel, while the $y$-coordinates of the intermediate pixels correspond to the original pixel grid.

In this implementation the scaled image is taken as reference; alternatively, the original image may be taken as a reference.

The process computes pixel values of the intermediate pixels by interpolating the pixel values of the neighbouring original pixels on the same scan line. To this end, the process uses the distance $s_x$ obtained as the fractional part of coord_dist obtained in step 302 as a weighting factor according to:

$$x_A = \left(1 - s_x\right)x_{0,0} + s_x x_{0,1} = s_x\left(x_{0,1} - x_{0,0}\right) + x_{0,0}$$
$$x_B = \left(1 - s_x\right)x_{1,0} + s_x x_{1,1} = s_x\left(x_{1,1} - x_{1,0}\right) + x_{1,0} \qquad (3)$$

where $x_{0,0}$, $x_{0,1}$, $x_{1,0}$, and $x_{1,1}$ denote the pixel values of original pixels $opx_{0,0}$, $op_{0,1}$, $op_{1,0}$, and $opx_{1,1}$, respectively.

In subsequent step 304, the process performs the corresponding interpolation in $y$-direction based on the intermediate pixel values. To this end, the process computes the new pixel value of the scaled pixel $spx$ by weighting the pixel values obtained in (3) with the vertical distance $s_y$ between scaled and original pixel as

$$spx = \left(1 - s_y\right)x_A + s_y x_B = s_y\left(x_B - x_A\right) + x_A \qquad (4)$$

where $s_y$ represents the vertical distance between opx and $spx$. The vertical distance $s_y$ may be computed in the same fashion as $s_x$ as described herein.

In step 305, the process determines whether the last scaled pixel in a scan line has been computed. If this is the case, the process proceeds at step 306; otherwise the process proceeds at step 307.

At step 307, the process increments the scaled pixel in x-direction to the next pixel along the same scan line. Hence, in this embodiment, the pixels are scaled in a SL-based fashion, i.e., pixels are scaled giving a higher priority to horizontal scaling. It will be appreciated, however, that the scaling may also be performed column by column.

In step 308, the process computes the coordinate and distance $s_x$ of the original pixels to be used for computing the pixel value of the next scaled pixel. Both coordinate and horizontal distance $s_x$ are computed by a single operation as

$$coord\_dist_n = coord\_dist_{n-1} + rsx \qquad (5)$$

where $rsx$ is the reciprocal of the scaling factor $scale\_x$ read from a register 301, and where $eoord\_dist_{n-1}$ denotes the value of $coord\_dist$ calculated during the previous iteration and read from the register. By reusing the previously calculated value of $coord\_dist$, eqn. (5) provides a fixed point value that represents the new coordinate and distance to be used for calculating the pixel value of the next scaled pixel. The coordinate and distance can be determined as integer and fractional portions, respectively, of the new value of $coord\_dist$ (denoted in eqn. (5) by $coord\_dist_n$) as illustrated by eqn. (2).

Accordingly, the process returns to step 303 so as to calculate the pixel value of the next scaled pixel.

This procedure is iterated horizontally until a defined number of pixels are scaled in $x$-direction. Thereafter, the process proceeds to the next scan line. Accordingly, at step 306, the process determines whether all scan lines have been processed. If the last scan line has been processed the process terminates. Otherwise, at step 309, the process increments the scan line, i.e. the $y$-coordinate of the scaled pixels, resets the x-coordinate of the scaled pixels to $cspx_{0,0}$, and returns to step 302 (alternatively, if the initial value of $coord\_dist$ is stored in a separate register, the process may return to step 303). In step 309, the process may also determine the vertical coordinate and vertical distance $s_y$ for the next scan line, e.g. by an incremental process as explained in connection with eqn. (5) for the $x$-direction, but with the value $rsy$ and a previous vertical coordinate and vertical distance instead. The number of pixels scaled in $x$- and $y$-direction may depend on the available memory.

Hence, the method described herein introduces a method for coordinate and weighting factor calculation exemplified by bilinear scaling and feasible for HW implementation. Bilinear scaling enhances image quality compared to nearest neighboring scaling. The method can be used to scale images in various data formats. The generic strategy has the advantage that the same HW may be utilized for both up- and downscaling.

Embodiments of the method described herein are fast and efficient in area when implemented in HW, as the computation of coordinates and coordinate distances as defined in eqn. (5) which provides both values by a simple addition. The HW cost for an implementation of embodiments of the method described herein is relatively low, since generic multipliers are only required in eqn. (3) and (4). Furthermore, a folded architecture could reduce the number of multipliers and adders. Furthermore, the method only requires few register values which makes a HW accelerator implementing the method easy controllable by SW.

Although some embodiments have been described and shown in detail, the invention is not restricted to them, but may also be embodied in other ways within the scope of the subject matter defined in the following claims.

In particular, the embodiments have mainly been described with reference to a mobile terminal as an example of a data processing device. It is understood, however, that the method, product means, and device described herein may also be applied to other data processing devices.

The method, product means, and device described herein can be implemented by means of hardware comprising several distinct elements, and/or partly or completely by means of a suitably programmed microprocessor. In the device claims enumerating several means, several of these means can be embodied by one and the same item of hardware, e.g. a suitably programmed microprocessor, one or more digital signal processor, or the like. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

**Claims**

1. A method implemented by a processing device of scaling an original digital representation by at least one scaling factor to obtain a scaled digital representation, the original digital representation comprising a plurality of original cells having respective original cell values and being arranged in an original regular grid, a position of each original cell in the original grid being identifiable by at least one corresponding original coordinate associated with the original cell, the scaled digital representation comprising a plurality of scaled cells having respective scaled cell values and being arranged in a scaled regular grid, a position of each scaled cell in the scaled grid being identifiable by at least one corresponding scaled coordinate associated with the scaled cell; wherein the method comprises

- computing a scaled cell value of a first scaled cell from at least an original cell value of a first original cell;
- determining an original coordinate of a second original cell as an integer portion of a computed parameter;
- computing a scaled cell value of a second scaled cell from at least an original cell value of the second original cell; wherein determining the original coordinate of the second original cell comprises adding a value determined from the scaling factor to a parameter indicative of an original coordinate of the first original cell and of the distance between the first original cell and the first scaled cell to obtain the computed parameter.

**2.** A method according to claim 1, wherein the original and scaled digital representations are respective original and scaled images and the original and scaled cells are respective original and scaled pixels arranged in a two-dimensional grid.

**3.** A method according to any one of claims 1 through 2, wherein the value determined from the scaling factor is a reciprocal of the scaling factor.

**4.** A method according to any one of claims 1 through 3, further comprising determining the distance between the second original cell from the second scaled cell from the computed parameter.

**5.** A method according to claim 4, wherein determining the distance between the second original cell from the second scaled cell comprises determining the distance between the second original cell from the second scaled cell as a fractional part of the computed parameter.

**6.** A method according to any one of claims 1 through 5, wherein the second scaled cell is adjacent to the first scaled cell.

**7.** A method according to any one of claims 1 through 6, wherein each of the original and scaled regular grids comprises an array of scan lines, each scan line comprising a sequence of cells.

**8.** A method according to claim 7, wherein the second scaled cell is included in the same scan line as the first scaled cell.

**9.** A method according to claim 7 or 8, wherein the array of scan lines is a one-dimensional array of scan lines.

**10.** A method according to any one of claims 1 through 9, further comprising storing the computed parameter in a register of the processing device.

**11.** A method according to any one of claims 1 through 10, wherein computing the scaled value of the second scaled cell comprises computing the scaled value by bilinear scaling

**12.** A method according to any one of claims 1 through 11, wherein computing the scaled value of the second scaled cell comprises using the distance between the second original cell from the second scaled cell as a weighting factor.

**13.** A method according to any one of claims 1 through 12, wherein the parameter indicative of an original coordinate of the first original cell and of the distance between the first original cell and the first scaled cell comprises an integer portion indicative of the original coordinate of the first original cell and a fractional portion indicative of the distance between the first original cell and the first scaled cell.

**14.** A computer program product comprising program code means adapted to perform the method according to any one of claims 1 through 13, when said program code means are executed on a data processing device.

**15.** A processing device comprising a scaling module configured to perform the method according to any one of claims 1 through 13.

**16.** A processing device according to claim 16, wherein the scaling module is a hardware module.

**17.** A processing device according to claim 15 or 16, comprising at least one of storage means for storing the scaled digital representation and a display for displaying the scaled digital representation

**18.** A processing device according to any one of claims 15 through 17, wherein the processing device is a programmable microprocessor.

**19.** A processing device according to any one of claims 15 through 18, wherein the processing device is a mobile terminal.

FIG. 1

FIG. 2

STRT

*off_bc, scale_x, scale_y, rsx, rsy*

302

$coord\_dist = (cspx_{0,0} / scale\_x) - off\_bc$

303

$X_A = s_x (x_{0,1} - x_{0,0}) + x_{0,0}$
$X_B = s_x (x_{1,1} - x_{1,0}) + x_{1,0}$

301

REG

304

$spx = s_y (x_B - x_A) + x_A$

305

scanline done?

Y          N

306

all done?

307

next *spx*

Y

RTN

N

308

$coord\_dist = s_x + rsx$

Next scan line

309

FIG. 3

EP 2 120 207 A1

**Europäisches Patentamt**
**European Patent Office**
**Office européen des brevets**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 252 576 B1 (NOTTINGHAM JAMES R [US]) 26 June 2001 (2001-06-26) * column 2, line 43 - column 5, line 3 * * claims 1-6 * ----- | 1-19 | INV. G06T3/40 |
| X | US 5 579 418 A (WILLIAMS LEON C [US] ET AL) 26 November 1996 (1996-11-26) * the whole document * ----- | 1-19 | |
| X | US 2007/025644 A1 (WANG GHY-BIN [TW] ET AL) 1 February 2007 (2007-02-01) * the whole document * ----- | 1-19 | |
| X | US 5 825 367 A (SHYU RONG-FUH [TW] ET AL) 20 October 1998 (1998-10-20) * the whole document * ----- | 1-19 | |
| A | US 4 829 587 A (GLAZER FRANK C [US] ET AL) 9 May 1989 (1989-05-09) * the whole document * ----- | 1-19 | |

| | | | TECHNICAL FIELDS SEARCHED (IPC) |
|---|---|---|---|
| | | | G06T |

The present search report has been drawn up for all claims

| Place of search | Date of completion of the search | Examiner |
|---|---|---|
| The Hague | 14 October 2008 | Deltorn, Jean-Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 08 15 6296

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2008

| Patent document cited in search report | | Publication date | Patent family member(s) | | Publication date |
|---|---|---|---|---|---|
| US 6252576 | B1 | 26-06-2001 | NONE | | |
| US 5579418 | A | 26-11-1996 | BR | 9403957 A | 20-06-1995 |
| | | | CA | 2129092 A1 | 05-04-1995 |
| | | | DE | 69425057 D1 | 03-08-2000 |
| | | | DE | 69425057 T2 | 08-03-2001 |
| | | | EP | 0706154 A1 | 10-04-1996 |
| | | | JP | 7220061 A | 18-08-1995 |
| US 2007025644 | A1 | 01-02-2007 | CN | 1812552 A | 02-08-2006 |
| US 5825367 | A | 20-10-1998 | NONE | | |
| US 4829587 | A | 09-05-1989 | DE | 3853855 D1 | 29-06-1995 |
| | | | DE | 3853855 T2 | 29-02-1996 |
| | | | EP | 0302930 A1 | 15-02-1989 |
| | | | JP | 1502942 T | 05-10-1989 |
| | | | WO | 8806769 A1 | 07-09-1988 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5801678 A